(19) Europäisches Patentamt
European Patent Office
Office européen des brevets

(11) Publication number: 0 131 392
A1

(12) # EUROPEAN PATENT APPLICATION

(21) Application number: 84303965.2

(22) Date of filing: 12.06.84

(51) Int. Cl.⁴: H 01 M 4/58
H 01 M 10/36, C 01 C 3/12

(30) Priority: 22.06.83 JP 112427/83

(43) Date of publication of application:
16.01.85 Bulletin 85/3

(84) Designated Contracting States:
CH DE FR GB LI

(71) Applicant: SEIKO INSTRUMENTS & ELECTRONICS LTD.
31-1, Kameido 6-chome
Koto-ku Tokyo(JP)

(72) Inventor: Ataka, Tatsuaki Seiko Instruments & Elec. Ltd.
6-31-1, Kameido
Koto-ku Tokyo(JP)

(72) Inventor: Iwasa, Koji Seiko Instruments & Elec. Ltd.
6-31-1, Kameido
Koto-ku Tokyo(JP)

(74) Representative: Caro, William Egerton et al,
J. MILLER & CO. Lincoln House 296-302 High Holborn
London WC1V 7JH(GB)

(54) **Secondary cell.**

(57) A secondary cell comprises an anode, a cathode and an electrolyte in contact with both the anode and the cathode. The cathode contains as an electrochemically active material an oxidation product of a polynuclear metal cyanide complex of the general formula:

$M^A_K[M^B(CN)_6]_l \cdot xH_2O$

where $M^A$: a metal ion having a valence of A,
$M^B$: a metal ion having a valence of B,
K: a positive number of from 1 to 4,
l: a positive number of from 1 to 3,
x: a positive number inclusive of 0,
and wherein A, B, K and l satisfy the following relation:

$A \times K = (6 - B) \times l.$

The anode contains as an electrochemically active material a reduction product of the polynuclear metal cyanide complex. Thus, in one Example, the cathode may contain Berlin Green and the anode may contain Everitt's salt.

EP 0 131 392 A1

# SECONDARY CELL

This inventions relates to secondary cells.

In recent years small portable electronic devices powered by electrical cells have become very advanced and are now in widespread use. Such electronic devices are: wrist watches, cameras, calculators, lighters, hearing aids, etc. Thus efforts have been made to produce electrical cells of relatively small size and of reduced thickness, yet having increased capacity. However, as the number of functions of small portable electronic devices has increased, this has inevitably resulted in an increase in their power consumption. Therefore, the cells of such electronic devices must satisfy requirements which conflict in the effort to reduce their size and thickness. It has therefore been suggested to provide a maintenance-free power source by combining a solar cell with a secondary cell.

Several types of secondary cell are now in use, such as cadmium-nickel cells and zinc-silver oxide cells both using aqueous electrolytes, and lithium-titanium disulphide cells using nonaqueous electrolytes. Secondary cells must be capable of performing a relatively large number of charge/discharge cycles, have a relatively good charging efficiency and have a relatively small self-discharge rate. These requirements need to be taken into consideration when determining the cathodically active material and the anodically active material of secondary cells. Cathodically active materials should exhibit little or no structural change as a result of the electrochemical oxidizing and reducing reactions which should be reversible, and cathodically active materials should have very low solubility in the electrolyte. Anodically active materials, on the other hand, should not form dendrites during the period of charging, and should not produce gas as a result of side reactions.

However, conventional anodically and cathodically active materials in secondary cells cannot fully satisfy all of the above requirements. For example, cadmium-nickel cells have a relatively low charging efficiency due to a side reaction which cause oxygen to evolve on the cathode during charging. Lithium-titanium disulphide cells suffer from the disadvantage that the titanium disulphide crystals decay with the repetition of the charge/discharge cycles, since lithium ions infiltrate into the titanium disulphide crystals during charging, so that the crystals extend in the direction of the C-axis.

According to the present invention, there is provided a secondary cell comprising an anode, a cathode, and an electrolyte in contact with both the anode and the cathode, characterised by said cathode containing as an electrochemically active material an oxidation product of a polynuclear metal cyanide complex of the general formula:

$$M_K^A[M^B(CN)_6]_\ell \cdot xH_2O$$

where $M^A$: a metal ion having a valence of A,

$M^B$: a metal ion having a valence of B,

K : a positive number of from 1 to 4,

$\ell$ : a positive number of from 1 to 3,

x ; a positive number inclusive of 0

and wherein A, B, K and $\ell$ satisfy the following relation:

$$A \times K = (6 - B) \times \ell$$

and, said anode contains as an electrochemically active material a reduction product of the said polynuclear metal cyanide complex.

The polynuclear metal cyanide complex may be represented by the formula:

$$M_4^A[M^B(CN)_6]_3 \cdot xH_2O$$

where $M^A$: Fe(III), Ru(III), Os(III), Al(III), Sb(III), Bi(III), Ce(III),

$M^B$: Fe(II), Fu(II), Ox(II),

x : a positive number inclusive of 0.

Alternatively, the polynuclear metal cyanide complex may be represented by the formula:

$M^A_3[M^B(CN)_6]_2.xH_20$

where $M^A$: Mn(II), Fe(II), Ru(II), Os(II), Co(II), Ni(II), Cu(II), Zn(II), Cd(II), Sn(II), Pb(II), Hg(II), Pd(II), Rh(II), Th(II), Ti(II),

$M^B$: Cr(III), Mn(III), Fe(III), Co(III), Rh(III), Ir(III),

x : a positive number inclusive of 0.

As a further possibility the polynuclear metal cyanide complex may be represented by the formula:

$M^A[M^B(CN)_6].xH_20$

$M^A$: Sn(IV), Ce(IV),

$M^B$: Cr(II), Mn(II), Fe(II), Ru(II), Os(II), Co(II), Rh(II), Ir(II),

x ; a positive number inclusive of 0.

The invention is illustrated, merely by way of example, in the accompanying drawings, in which:-

Figure 1 shows cyclic voltammograms of oxidation-reduction reaction of Prussian Blue formed by two different methods; and

Figure 2 shows a single-electrode constant-current charge/discharge characteristics of Prussian Blue and Everitt's salt and constant-current charge/discharge characteristics of Everitt's salt and Berlin Green.

When discussing Prussian Blue and Prussian Blue analogs it is most convenient to start with Prussian Blue itself because it has been well studied in the past. An understanding of Prussian Blue analog follows easily from an understanding of Prussian Blue itself.

Prussian Blue is a compound which was first synthesized in 1704 by Diesbach, a dye craftsman, in Berlin. Since then, because of its deep blue colour, Prussian Blue has been widely used as a pigment for printing inks, paints, etc. and has other colouring uses. Prussian blue has some interesting properties in addition to being the first metal complex to be synthesized.

Prussian Blue is believed to include two types of compounds, i.e. soluble Prussian Blue $M^{I}Fe(III)[Fe(II)(CN)_6]$ and insoluble Prussian Blue $(Fe(III)_4[Fe(II)(CN)_6]_3$ wherein $M^{I}$ represents a monovalent cation. One of the interesting properties of Prussian Blue is that whichever type it is, Fe(II) and Fe(III), which have different oxidation numbers, coexist in a common crystal lattice. Prussian Blue is thus a typical mixed valence complex compound. A second interesting property is that whichever type it is, Prussian Blue is an insoluble salt having a solubility product $Ksp = 10^{-40}$. A third interesting property of Prussian Blue is that Everitt's salt which is the reduction product of Prussian Blue represented by $M^{I}_2Fe(II)[Fe(II)(CN)_6]$ or $M^{I}_4Fe(II)_{4-}(Fe(II)(CN)_6]_3$ and Berlin Green which is the oxidation product of Prussian Blue represented by $Fe(III)[Fe(III)(CN)_6]$ or $Fe(III)_4[Fe(III)(CN)_6]_3.3X^-$, where $X^-$ represents a monovalent anion, both have the same lattice constant of 10.2 Å as Prussian Blue (see, for example, J.F. Keggin and F.D. Miles, Nature, 137, 577 (1936)). This means that the crystalline structure of Prussian Blue is not changed when it undergoes oxidation-reduction reactions.

These interesting properties of Prussian Blue are also found in Prussian Blue analogs. For example, a compound having Ru(II) substituted for Fe(II) bonded to the carbon atoms of the cyano groups of Prussian Blue is also a mixed valence complex compound and is a purple pigment known as Ruthenium purple. Ruthenium purple has a lattice constant of 10.4 Å (see, for example J.F. Keggin and F.D. Miles, Nature 137, 577 (1936)). It is also known that $[Cr(III)(CN)_6]^{3-}$ bonds with $Mn^{2+}$, $Fe^{2+}$, $Co^{2+}$, $Ni^{2+}$, $Cd^{2+}$, to form very low solubility salts represented by $M^{II}_3[Cr(CN)_6]_2$, and which has the same salt structure as Prussian Blue and a lattice constant $a$ = 10.1 to 10.6 Å. Similarly, $[M(III)(CN)_6]^{3-}$ where $M = Mn^{3+}$, $Co^{3+}$, $Rh^{3+}$ or $Ir^{3+}$ forms Prussian Blue analogs (see, for example, B.M. Chadwick and A.G. Sharpe, Advan. Inorg. Chem. Radiochem. 8, 83 (1966)). Generally Prussian Blue analogs may

may be represented by the general formula:

$$M^A_K[M^B(CN)_6]_\ell \cdot xH_2O$$

wherein $M^A$: a metal ion having a valence of A,

$M^B$: a metal ion having a valence of B,

K : a positive number from 1 to 4,

$\ell$ : a positive number from 1 to 3,

x : a positive number including 0.

The foregoing shows that Prussian Blue and its analogs are salts with very low solubility having a common structure.

Prussian Blue and its analogs are electrochemically active compounds capable of undergoing a reversible oxidation-reduction reaction. Although Prussian Blue and its analogs are mixed valence complex compounds having a metal ion as a redox centre, their electrochemical behaviour is not well known at present. This is because Prussian Blue and its analogs have been traditionally available only in the form of colloidal particles. Prussian Blue is conventionally prepared by the following methods:

(a) $Fe^{2+}$ + $[Fe(III)(CN)_6]^{3-}$ —— Prussian Blue

(b) $Fe^{3+}$ + $[Fe(II)(CN)_6]^{4-}$ —— Prussian Blue

(c) $Fe^{2+}$ + $[Fe(II)(CN)_6]^{4-}$ —— Everitt's salt $\xrightarrow{\text{oxidation}}$ Prussian Blue

Prussian Blue is obtained only in the form of colloidal particles since the chemical reaction takes place very rapidly according to any one of methods (a), (b) and (c). Up until now it was impossible to obtain Prussian Blue in the form of a film which could be conveniently used as an electrode to examine the electrochemical behaviour of Prussian Blue.

Prussian Blue and its analogs can now be obtained in the form of a film on an electrode having a suitable shape to examine the electrochemical behaviour thereof by one of the following methods:

(1) Prussian Blue or a Prussian Blue analog is electrolytically produced in the form of a film on an electrically conductive

substrate to obtain a thin film electrode.

(2) A composite thin film electrode is obtained by binding Prussian Blue or a Prussian Blue analog with a matrix polymer together with an electrically conductive agent such as acetylene black.

Methods (1) and (2) are briefly explained hereinafter and the electrochemical behaviour of Prussian Blue as a typical example will be discussed.

First, method (1) is not only important in that a film of Prussian Blue can be produced, but is also important from the standpoint of evaluating whether method (2) is appropriate or not. Method (1) is based on the experimental finding that, unlike conventional methods (a), (b), (c) of synthesising Prussian Blue, no deposit forms in a mixed solution containing $Fe^{3+}$ and $[Fe(CN)_6]^{3-}$. A very small platinum plate electrode on which a film of Prussian Blue is to be formed and a large platinum plate electrode to be used as a counter electrode, were immersed in a solution containing $Fe^{3+}$ and $[Fe(CN)_6]^{3-}$ ions. Constant-current electrolysis was then carried out for about 10 minutes by cathodically polarising the small platinum electrode at a current density of about 10 $\mu A/cm^2$. At the end of electrolysis, it was found that a film of Prussian Blue had been deposited as a blue film on the small platinum electrode.

In order to examine its electrochemical behaviour, the thus obtained film of Prussian Blue was placed in 1 M KCl to provide a three-electrode electrolytic cell. A cyclic voltammogram of the film of Prussian Blue was produced by sweeping a triangular waveform potential thereon. The result is as shown by curve (1) in Figure 1. When the potential with respect to a saturated calomel electrode (SCE) is +0.6 V, the film is Prussian Blue. As the potential is swept from +0.6 V, toward the cathode potential, a reduction current peak appears at about +0.2 V and the film changes to a film of Everitt's salt at -0.2 V. As the potential is swept from -0.2 V toward the anode potential, an oxidation

current peak appears at about +0.2 V and the film changes to a film of Prussian Blue at +0.6 V.

The above process may be expressed by the following electrochemical reaction scheme:

$$Fe(III)_4[Fe(II)(CN)_6]_3 + 4e^- + 4K^+ \rightleftarrows K_4^+Fe(II)_4[Fe(II)(CN)_6]_3$$

Prussian Blue Everitt's salt

Next, as the potential of the electrode is swept from +0.6 V towards the anode potential, an oxidation peak current appears at about 0.9 V, and the film becomes Berlin Green which is an oxidation product at about +1.4 V. As the potential is swept from +1.4 V to the cathode potential, a reduction peak current from Berlin Green to Prussian Blue appears at about +0.9 V, and the film becomes Prussian Blue at 0.6 V. The above process is expressed by the following electrochemical reaction scheme:

$$Fe(III)_4[Fe(II)(CN)_6]_3 - 3e^- + 3Cl^- \rightleftarrows Fe(III)_4 \rightleftarrows Fe(III)_4\ Fe(III)(CN)_6\ _3 .3Cl^-$$

Prussian blue Berlin green

Next, method (2) will be described. An aqueous solution containing $Fe^{2+}$ ions was mixed with an aqueous solution containing $[Fe(CN)_6]^{3-}$ ions, giving Prussian Blue in the form of a colloidal deposit. The Prussian Blue deposit was then thoroughly dried in vacuo and micronised to a fine powder having a particle size of not larger than 1 µm by means of a mixer mill. In a solution of toluene and 1% by weight of a low-density polyethylene were dispersed 100 mg of the fine Prussian Blue powder and 100 mg of acetylene black. The dispersion thus obtained was spread on a very small platinum plate electrode by a spin-coating method, and the toluene, acting as a solvent, was removed by evaporation in a dryer to obtain a composite electrode consisting of Prussian Blue, acetylene black, and low-density polyethylene. In order to examine the electrochemical properties of this composite electrode, cyclic voltammetry was carried out in 1 M KCl. The result is shown by a curve (2) in Figure 1. Like the method (1), the

electrochemical behaviour of Prussian Blue can be studied.

It was thus determined that by using either the electrolytic film-forming method (1) or the composite film-forming method (2), Prussian Blue can be used not only as a pigment but also as anodically and cathodically active materials for secondary cells, since it undergoes a reversible electrochemical reaction.

That is, Everitt's salt (ES) which is a reduction product of Prussian Blue (PB) serves as an anodically active material for a secondary cell according to the present invention which exhibits good reversible property, and Berlin Green (BG) which is an oxidation product of Prussian Blue serves as a cathodically active material for a secondary cell according to the present invention which exhibits good reversible properties.

It was also found that Prussian Blue analogs are also effective as anodically and cathodically active materials for secondary cells.

The following examples are given to demonstrate that oxidation and reduction products of Prussian Blue and Prussian Blue analogs are useful as cathodically active materials and anodically active materials for secondary cells.

Example 1

This example is given to illustrate single-electrode constant-current charge/discharge characteristics of Prussian Blue and Everitt's salt. A small platinum plate having an area of about 1 $cm^2$ and a large platinum plate having an area of 50 $cm^2$ were immersed in an aqueous solution containing potassium ferricyanide ($K_3F_6(CN)_6$) at a concentration of 20 mM and ferric chloride ($FeC\ell_3$) at a concentration of 20 mM, and having a pH of 1.0. Electrolysis was carried out at a current density of 10 μA for 10 minutes with the small platinum plate as the anode. A film of Prussian Blue was found to have been deposited on the small platinum plate.

The electrode so formed, a platinum electrode having an area of 10 $cm^2$, and a saturated calomel electrode (SCE) as a reference electrode, were immersed in an aqueous solution containing potassium

sulphate ($K_2SO_4$) at a concentration of 0.5 M, to constitute an electrolytic cell of the three-electrode type. The single-electrode constant-current charge/discharge characteristics of the electrode with a film of Prussian Blue were examined by means of this electrolytic cell. Curve (1) of Figure 2 represents charge/discharge characteristics at a current density of 10 $\mu A/cm^2$. Current efficiencies of charge and discharge were 100% and 98%, respectively, and current efficiencies were nearly the same even after $10^3$ charge/discharge cycles.

Example 2

This example deals with charge/discharge characteristics of a secondary cell according to the present invention in which a reduction product of Prussian Blue, i.e. Everitt's salt was used as the anodically active material, and an oxidation product of Prussian Blue, i.e., Berlin Green was used as the cathodically active material.

A film of Prussian Blue was precipitated onto a platinum plate having an area of 1 $cm^2$ in the same manner as that of Example 1. A first electrode obtained by effecting electrolysis at a current density of 10 μA for 10 minutes, was then subjected to electrolysis for 15 minutes to form a second electrode.

A secondary cell was constituted by using the first and second electrodes. An aqueous solution having a pH of 4.0 and containing potassium sulphate at a concentration of 0.5 M, was used as an electrolyte. Curve (2) of Figure 2 represents constant-current charge/discharge characteristics at a current density of 10 $\mu A/cm^2$. During charging the first electrode acts as a cathode and the second electrode acts as an anode. These roles are reversed during discharge.

From the charge/discharge characteristics, the charge/discharge efficiency was found to be about 90% maintaining an average terminal voltage of 0.8 V. The terminal voltage and charge/discharge efficiency were found to be nearly the same even after $10^3$ charge/

discharge cycles.

The electrochemical reaction of the secondary cell for each of the electrodes are thought to be as follows:

First Electrode

$$Fe(III)_4[Fe(II)(CN)_6]_3 + 4K^+ + 4e^- \underset{\text{discharge}}{\overset{\text{charge}}{\rightleftarrows}} K_4Fe(II)(CN)_6]_3$$

Prussian Blue | Everitt's salt

Second Electrode

$$Fe(III)_4[Fe(II)(CN)_6]_3 + 3/2\ SO_4^{2-} - 3e^- \underset{\text{discharge}}{\overset{\text{charge}}{\rightleftarrows}} Fe(III)_4[Fe(III)(CN)_6]_3 \cdot \frac{3}{2} SO_4^{2-}$$

Prussian blue | Berlin green

In this example, it will be seen that the reduction product (Everitt's salt) of Prussian Blue serves as the anodically active material for the secondary cell, and the oxidation product thereof (Berlin Green) serves as a cathodically active material for the secondary cell. That is, there is achieved a thin-film secondary cell which employs the same compound, but having differently oxidized states, for the anode and the cathode.

Example 3

A first electrode having a film thickness of 3000 Å and a second electrode having a film thickness of 4000 Å were formed on a platinum plate having an area of about 1 $cm^2$ by method (2) above. The charge/discharge characteristics were examined in the same manner as in Example 2. The charge/discharge efficiency was found to be about 80% maintaining an average terminal voltage of about 0.8 V. The terminal voltage and charge/discharge efficiency were found to be nearly the same even after $10^3$ charge/discharge cycles.

Example 4

This Example illustrates a thin-film secondary cell according to the present invention which employs a reduction product and an oxidation product of $Fe(III)_4[Os(II)(CN)_6]_3.xH_2O$ as the anodi-

cally active material and the cathodically active material, respectively.

First, $K_4[Os(CN)_6]$ synthesized according to a customary manner was oxidised with $PbO_2$ which is an insoluble oxidizing agent, in an acidic aqueous solution containing sulphuric acid, such solution contained $[Os(III)(CN)_6]^{3-}$ ions. An aqueous solution containing 20 mM of $[Os(III)(CN)_6]^{3-}$ ions was admixed with the same amount of an aqueous solution having a pH of 1.0 containing ferric chloride ($FeC\ell_3$) at the same concentration to form a clear solution of pale yellowish colour. A large platinum plate having an area of about 50 $cm^2$ to be used as a cathode and a small platinum plate having an area of 1 $cm^2$ were immersed in this solution, and constant-current electrolysis was performed at a current of 5 μA for 15 mintues with the small platinum plate as the anode. A purple film was precipitated on the anode to form a first electrode. The electrolysis was performed for 20 minutes to precipitate a purple film on a further platinum plate having an area of 1 $cm^2$ to form a second electrode.

Then, a secondary cell was constituted by using the first and second electrodes and the constant-current charge/discharge characteristics were determined in the same manner as in Example 2. The first electrode was used as the cathode and the second electrode was used as the anode during charging and vise versa during discharging. After $10^3$ charge/discharge cycles, the charge/discharge efficiency was about 80% maintaining an average terminal voltage of abut 0.8 V.

Example 5

This example illustrates a thin-film secondary cell which employs a reduction product and an oxidation product of $Fe(II)_3[Mn(III)(CN)_6]_2.xH_2O$ as an anodically active material and a cathodically active material, respectively.

An aqueous solution containing $K_3[Mn(III)(CN)_6]$ and an aqueous solution containing $FeC\ell_2$ were mixed together at an equal molar ratio to obtain a precipitate of $Fe(II)_3[Mn(III)(CN)_6]_2.xH_2O$. By

method (2) above, a composite-film electrode was obtained by forming $Fe(II)_3[Mn(III)_6]_2$ - acetylene black - low density polyethylene on the platinum plate. A secondary cell was constituted by using two composite-film electrodes thus produced. Constant-current charge/discharge characteristics were determined in the same manner as in Example 2. The charge/discharge efficiency was about 70% maintaining an average terminal voltage of about 0.9 V after 100 charge/discharge cycles.

Example 6

This Example illustrates a thin-film secondary cell employing a reduction product and an oxidation product of $Sn(IV)[Fe(II)(CN)_6].xH_2O$ as an anodically active material and a cathodically active material, respectively.

An aqueous solution containing $K_4[Fe(II)(CN)_6]$ and $SN(IV)C\ell_4$ dissolved in an acidic aqueous solution of hydrochloric acid were mixed together at an equal molar ratio to obtain a white precipitate of $SN(IV)[Fe(II)(CN)_6].xH_2O$. Relying upon method (2) above, a composite-film electrode was obtained by forming $Sn(IV)[Fe(II)(CN)_6]$ - acetylene black - low-density polyethylene on a platinum plate. A secondary cell was constituted by using two composite electrodes thus produced. Constant-current charge/discharge characteristics were determined in the same manner as in Example 2. The charge/discharge efficiency was about 70% maintaining an average terminal voltage of about 0.8 V after 100 charge/discharge cycles.

CLAIMS

1. A secondary cell comprising an anode, a cathode, and an electrolyte in contact with both the anode and the cathode, characterised by said cathode containing as an electrochemically active material an oxidation product of a polynuclear metal cyanide complex of the general formula:

$M^A_K[M^B(CN)_6]_\ell \cdot xH_2O$

where $M^A$: a metal ion having a valence of A,

$M^B$: a metal ion having a valence of B,

K : a positive number of from 1 to 4,

$\ell$ : a positive number of from 1 to 3,

x : a positive number inclusive of 0,

and wherein A, B, K and $\ell$ satisfy the following relation:

$A \times K = (6 - B) \times \ell$

and, said anode contains as an electrochemically active material a reduction product of the said polynuclear metal cyanide complex.

2. A secondary cell as claimed in claim 1, characterised in that the polynuclear metal cyanide complex is represented by the formula:

$M^A_4[M^B(CN)_6]_3 \cdot xH_2O$

where $M^A$: Fe(III), Ru(III), Os(III), Al(III), Sb(III), Bi(III), Ce(III),

$M^B$: Fe(II), Ru(II), Os(II),

x : a positive number inclusive of 0.

3. A secondary cell as claimed in claim 1 characterised in that the polynuclear metal cyanide complex is represented by the formula:

$M^A_3[M^B(CN)_6]_2 \cdot xH_2O$

where $M^A$: Mn(II), Fe(II), Ru(II), Os(II), Co(II), Ni(II), Cu(II), Zn(II), Cd(II), Sn(II), Pb(II), Hg(II), Pd(II), Rh(II), Th(II), Ti(II),

$M^B$: Cr(III), Mn(III), Fe(III), Co(III), Rh(III), Ir(III),

x : a positive number inclusive of 0.

4. A secondary cell as claimed in claim 1 characterised in that the polynuclear metal cyanide complex is represented by the formula:

$M^A[M^B(CN)_6].xH_2O$

$M^A$: Sn(IV), Ce(IV),

$M^B$: Cr(II), Mn(II), Fe(II), Ru(II), Os(II), Co(II), Rh(II), Ir(II),

x : a positive number inclusive of 0.

1/1

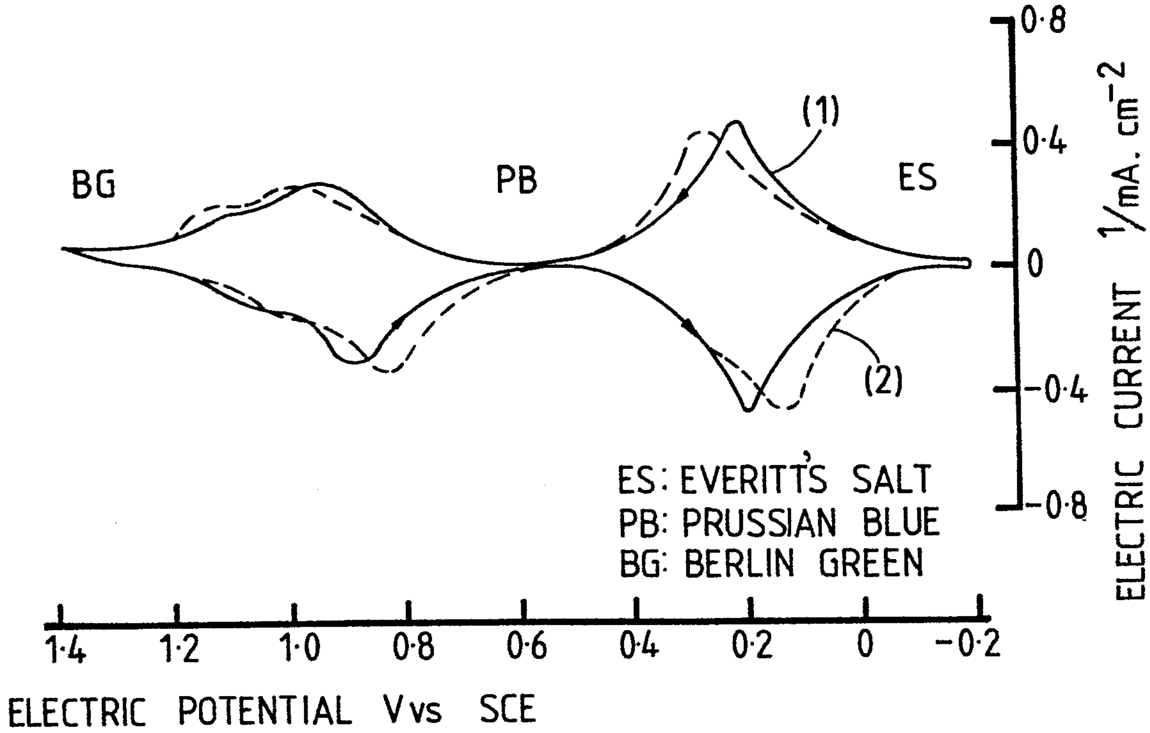
BG
PB
ES
(1)
(2)
0·8
0·4
0
−0·4
−0·8
ELECTRIC CURRENT 1/mA. cm−2
ES: EVERITT'S SALT
PB: PRUSSIAN BLUE
BG: BERLIN GREEN
1·4
1·2
1·0
0·8
0·6
0·4
0·2
0
−0·2
ELECTRIC POTENTIAL V vs SCE

*Fig. 1.*

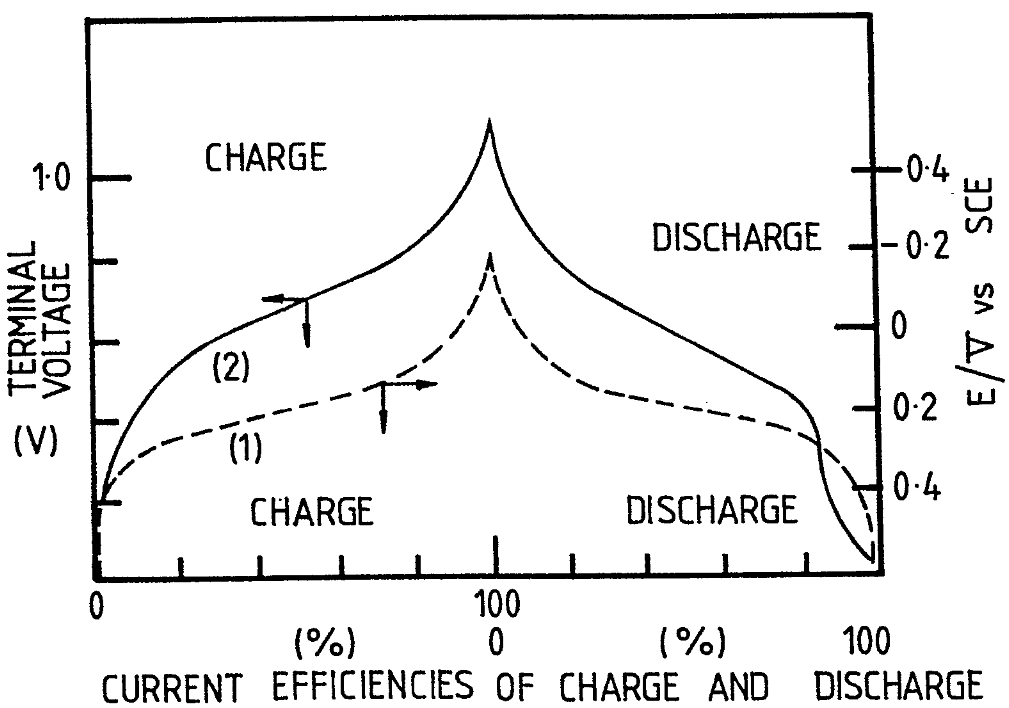
CHARGE
DISCHARGE
CHARGE
DISCHARGE
1·0
TERMINAL VOLTAGE
(V)
(2)
(1)
0·4
−0·2
0
0·2
0·4
E/V vs SCE
0
100
(%)
0
(%)
100
CURRENT EFFICIENCIES OF CHARGE AND DISCHARGE

*Fig. 2.*

European Patent Office

# EUROPEAN SEARCH REPORT

0131392
Application number

EP 84 30 3965

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| Y | EP-A-0 012 943 (S.A.F.T. - LECLANCHE) * abstract; page 2, lines 12-34; page 3, lines 1-2; page 5, example 2 * --- | 1,2 | H 01 M 4/58<br>H 01 M 10/36<br>C 01 C 3/12 |
| Y | FR-A-2 470 450 (DOL) * pages 1-2; page 4, example 5 * --- | 1,2 | |
| P,X | EP-A-0 086 555 (K.K. DAINI SEIKOSHA) * abstract; page 2, lines 3-31; page 3; page 8, lines 9-16; claims 1-3,8 * --- | 1-4 | |
| A | FR-A-2 324 127 (S.A.F.T.) * page 1, lines 38-40; page 2 * --- | | TECHNICAL FIELDS SEARCHED (Int. Cl. 3) |
| A | FR-A-2 431 196 (ORONZIO DE NORA IMPIANTI ELETTROCHIMICI S.P.A.) --- | | H 01 M 4/58<br>H 01 M 10/36<br>C 01 C 3/12 |
| A | FR-A- 650 923 (HELBRONNER) ----- | | |

The present search report has been drawn up for all claims

| Place of search | Date of completion of the search | Examiner |
|---|---|---|
| THE HAGUE | 27-09-1984 | DE VOS L.A.R. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons

& : member of the same patent family, corresponding document

EPO Form 1503. 03.82